# EUROPEAN PATENT SPECIFICATION

(11) **EP 1 622 990 B1**
(45) Date of publication and mention of the grant of the patent: **31.10.2007**
(21) Application number: 04741545.0
(22) Date of filing: 11.05.2004
(51) Int. Cl.: C09J 175/04, B32B 13/12, B32B 19/04, B32B 18/00, E04C 2/24

(54) **POLYISOCYANATE-BASED ADHESIVE FORMULATION FOR USE IN SANDWICH PANELS**
KLEBSTOFFZUSAMMENSETZUNG AUF BASIS VON POLYISOCYANATE ZUR VERWENDUNG IN SANDWICHPLATTEN
COMPOSITION ADHESIVE A BASE DE POLYISOCYANATE POUR UTILISATION DANS DES PANNEAUX SANDWICH

(30) Priority: 15.05.2003 EP 03010879
(43) Date of publication of application: 08.02.2006
(73) Proprietor: HUNTSMAN INTERNATIONAL LLC, Salt Lake City, Utah 84108 (US)
(72) Inventor: GAUDEUS, Erik, B-1700 Dilbeek (BE); SPASIC, Milan, D., YU-11118 Belgrade (YU); GURKE, Thorsten, B-3090 Overijse (BE)
(74) Representative: Swinnen, Anne-Marie
(86) International application number: PCT/EP2004/050757
(87) International publication number: WO 2004/101699

(56) References cited:
- GB-A- 1 423 558
- GB-A- 2 117 776
- US-A- 5 107 928
- US-A1- 2002 031 669
- US-B1- 6 231 985
- DATABASE WPI Section Ch, Week 200250 Derwent Publications Ltd., London, GB; Class A25, AN 2002-465558 XP002303657 & JP 2002 020716 A (NIPPON POLYURETHANE KOGYO KK) 23 January 2002 (2002-01-23)
- DATABASE WPI Section Ch, Week 199309 Derwent Publications Ltd., London, GB; Class A25, AN 1993-071306 XP002303658 & JP 05 017722 A (TOPCON CORP) 26 January 1993 (1993-01-26)

## Description

The present invention relates to polyisocyanate-based adhe"sives used in gluing coating layers onto an insulation layer so as to form a sandwich panel.

Adhesives based on compounds containing more than one isocyanate group per molecule and on compounds containing more than one hydroxyl group per molecule, so-called polyurethane adhesives or polyisocyanate-based adhesives, are used in many application areas due to their outstanding properties, their simple and economical processing and their high strength. An extremely important and large market for polyisocyanate-based adhesives is construction especially for lamination processes. For instance, sandwich panels, manufactured in a continuous process, can be made by bonding coating layers such as steel, aluminium or foil stressed skin materials to insulation layers such as polyurethane or polystyrene foam, mineral wool or other insulating cores.

In order for sandwich panels of the above kind to be usable for construction purposes, they must comply with certain requirements concerning reaction-to-fire, laid down in EU directive 89/106/EEC and Commission Decision 2000/147/EC.

The basis of the now valid European classification system is EN 13501-1 (reaction-to-fire). Consisting of seven Euro classes (A1, A2, B to F), it is based on four different test methods, which are the same across Europe, plus a so-called reference scenario.
A major element of the new system is the SBI (Single Burning Item) test (EN 13238), a medium-scale test method. In order to meet classes A2 to D products must undergo the SBI test. The test methods of the new classification system now make it possible to obtain a realistic impression of the reaction-to-fire performance of products. The SBI test simulates types of fire on a small scale and in near-authentic conditions. In this way it is possible to demonstrate whether the tested products really do improve the chances of escaping from the flames in a real-life inferno.

Adhesives have a special role to play herein since they go a long way to determining which fire rating the panels are awarded. For example, the calorific value of any glue joints with primer in such sandwich panels must not exceed 4 MJ/m² in order for the panels to obtain A2-classification according to EN 13501-1.

The calorific value of a material indicates the amount of energy that can potentially be released from the material in case of fire. The calorific value is determined according to EN ISO 1716 in a bomb calorimeter.
Polyurethane, which is typically used as basic component in adhesives for the preparation of sandwich panels of the kind stated above, has a calorific value of approximately 30-40 MJ/kg, and for the preparation of good quality panels it is normally required that the polyurethane adhesive be used in an amount of at least 300 g/m².

Hence recent developments have focused on the calorific value per kg of adhesives that later on determines the coating weight per m² thus the calorific value per m².

Attempts at lowering the calorific value of the polyurethane based adhesive by using large amounts of inorganic filler, such as calcium carbonate, have entailed an increase in the viscosity of the adhesive to such extent that such adhesives cannot be used in connection with the existing glue application methods and plants.
WO 02/46325 describes a polyurethane based binder containing at least 40 wt% of a particulate inorganic filler for gluing coating layers onto an insulation layer of e.g. mineral wool so as to form a sandwich panel.

Accordingly a substantial need exists for an adhesive composition capable of meeting the desired fire safety as well as the service and application conditions such as good adhesion to the various substrates, paintability, flexibility, wet adhesive strength, crack resistance, shelf stability and non-hazardous during application.

It is an object of the invention to provide an adhesive composition for use in sandwich panel having a lower calorific value than that of the known ones, and having at the same time a low viscosity suited for application purposes; said adhesive composition preferably not containing any filler material.

It is another object of the invention to provide an adhesive which can be used in suitable amounts for the preparation of sandwich panels, which are to be compliable with the requirements concerning reaction-to-fire performance pursuant to EU directive 89/106/EEC, obtaining A2 classification.

It has surprisingly been found that these objects are obtainable with a polyisocyanate based adhesive, which adhesive is characterised in that it is prepared by reacting an aqueous alkali metal silicate solution with an organic polyisocyanate.

When using such an adhesive for formation of glue joints in sandwich panels of the abovementioned kind, the calorific value of the glue joint and primer can be reduced to below 4 MJ/m², allowing a necessary coating weight of the adhesive, and the sandwich panels thus be made to comply with the requirement for obtaining an A2-classification.

Apart from fire retardant properties according to EN-13501-1 (A2), the adhesives of the present invention fulfil all the required mechanical properties, show good adhesion, have long term durability, show reliable processing at competitive production cost.

The adhesive of the present invention has a calorific value of below 30 MJ/kg, preferably below 25 MJ/kg, most preferably in the range 10 to 20 MJ/kg allowing a coating weight of 200 to 400 g/m² in order to comply with the A2-classification.

The adhesive formulation generally has a viscosity of between 100 and 5000 mPa s, preferably between 150 and 3000 mPa s, allowing use on high pressure impingement heads, bead application, airmix application and airless application.

The invention relates to a sandwich panel comprising an insulation layer (preferably inorganic) having on at least one side a glued-on coating layer. The sandwich panel according to the invention is characterised in that the glue joint between the insulation layer and the coating layer consists of an adhesive as described above.

Panels, as described above, with a mineral wool or cellular glass core and made using the adhesive of the present invention have passed the new, crucial Single Burning Item (SBI) test. Thanks to the present adhesives the panels are now also classified as A2: "Non-combustible", This classification is of immense importance for manufacturers of sandwich panels as the panels now meet even higher standards.

Other panel properties remain unchanged. Nor are there any drawbacks in terms of processing and the required machinery. Tests show that panels produced with the new adhesives have a lower calorific value, i.e. their potential contribution to a fire is lower.

The commercially available aqueous alkali metal silicates, normally known as "waterglass" have been found to give satisfactory results. Such silicates can be represented as M₂O.SiO₂ where M represents an atom of an alkali metal and they differ in the ratio of M₂O:SiO₂. It has been found that the sodium silicates are highly statisfactory and while the other alkali metal silicates, e.g. potassium and lithium silicates may be used they are less preferable on economic and performance grounds. Mixtures of sodium silicates and potassium silicates can be used as well; in such cases the ratio Na₂O/K₂O is preferably 99.5:0.5 to 25:75. The molar ratio M₂O to SiO₂ is not critical and may fluctuate within the usual limits, i.a. between 4 and 0.2, more especially between 1.5 and 3. Using the preferred sodium silicate, the SiO₂:Na₂O weight ratio may vary, for example, from 1.6:1 to 3.3:1. However it is found generally to be preferable to employ a silicate of which the said ratio is within the range 2:1 to 3.3:1. The concentration of the waterglasses used may readily be varied in accordance with the viscosity requirements or in accordance with the necessary water content, although it is preferred to use waterglasses having a solids content of from about 28 to 55 %, by weight, or waterglasses having a viscosity of less than 3000 mPa s, which is generally required for problem-free processing.

Preferably waterglasses are used that are not fully saturated; water in an amount of 1 to 50 wt%, preferably 1 to 40 wt%, most preferably 1 to 20 wt%, is added to a saturated waterglass solution. In a fully saturated waterglass solution almost all of the water molecules are physically bonded to the ions generated in the alkali metal silicates. Using such a preferred waterglass solution leads to some foaming of the adhesive composition during the curing process thereby providing better adhesion between the smooth outer face surface of an insulating panel and the rough and open-pored surface of its inner core material such as polyurethane foam, polystrene foam and mineral wool.

Examples of suitable commercially available waterglass is Crystal 0072, Crystal 0079 and Crystal 0100S (all Na based), available from INEOS Silicates and Metso 400 (K based), available from INEOS.

It is also possible to make the silicate solution in situ by using a combination of solid alkali metal silicate and water.

The polyisocyanate used in the present invention may comprise any number of polyisocyanates, including but not limited to, toluene diisocyanates (TDI), diphenylmethane diisocyanate (MDI) - type isocyanates, and prepolymers of these isocyanates. Preferably the polyisocyanate has at least one and preferably at least two aromatic rings in its structure, and is a liquid product. Polymeric isocyanates having a functionality greater than 2 are preferred.

The diphenylmethane diisocyanate (MDI) used in the present invention can be in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, or any of their derivatives having a urethane, isocyanurate, allophonate, biuret, uretonimine, uretdione and/or iminooxadiazinedione groups and mixtures of the same.

Examples of other suitable polyisocyanates are tolylene diisocyanate (TDI), hexamethylene diisocyanate (HMDI), isophorone diisocyanate (IPDI), butylene diisocyanate, trimethylhexamethylene diisocyanate, di(isocyanatocyclohexyl)methane, isocyanatomethyl-1,8-octane diisocyanate and tetramethylxylene diisocyanate (TMXDI).

Preferred polyisocyanates for the invention are the semi-prepolymers and prepolymers which may be obtained by reacting polyisocyanates with compounds containing isocyanate-reactive hydrogen atoms. Examples of compounds containing isocyanate-reactive hydrogen atoms include alcohols, glycols or even relatively high molecular weight polyether polyols and polyester polyols, mercaptans, carboxylic acids, amines, urea and amides. Particularly suitable prepolymers are reaction products of polyisocyanates with monohydric or polyhydric alcohols. The prepolymers are prepared by conventional methods, e.g. by reacting polyhydroxyl compounds which have a molecular weight of from 400 to 5000, in particular mono- or polyhydroxyl polyethers, optionally mixed with polyhydric alcohols which have a molecular weight below 400, with excess quantities of polyisocyanates, for example aliphatic, cycloaliphatic, araliphatic, aromatic or heterocyclic polyisocyanates. Given as examples of the polyether polyols are polyethylene glycol, polypropylene glycol, polypropylene glycol-ethylene glycol copolymer, polytetramethylene glycol, polyhexamethylene glycol, polyheptamethylene glycol, polydecamethylene glycol, and polyether polyols obtained by ring-opening copolymerisation of alkylene oxides, such as ethylene oxide and/or propylene oxide, with isocyanate-reactive initiators of functionality 2 to 8. Polyester diols obtained by reacting a polyhydric alcohol and a polybasic acid are given as examples of the polyester polyols. As examples of the polyhydric alcohol, ethylene glycol, polyethylene glycol, tetramethylene glycol, polytetramethylene glycol, 1,6-hexanediol, 3-methyl-1,5-pentanediol, 1,9-nonanediol, 2-methyl-1,8-octanediol, and the like can be given. As examples of the polybasic acid, phthalic acid, dimer acid, isophthalic acid, terephthalic acid, maleic acid, fumaric acid, adipic acid, sebacic acid, and the like can be given.

In a particularly preferred embodiment of the invention prepolymers are used as the polyisocyanate component having an average functionality of 2 to 2.9, preferably 2.1 to 2.6, a maximum viscosity of 6000 mPa s, and an isocyanate content of 6 to 30 wt%, preferably 10 to 26 wt%.

Preferred polyisocyanates to be used in the present invention are MDI-based including derivatives of MDI such as uretonimine-modified MDI and MDI prepolymers. These polyisocyanates typically have an NCO content of from 5 to 32 wt%, preferably 10 to 31 wt% and a viscosity of between 100 and 5000 mPa s, preferably 150 to 2000 mPa s.

The relative proportions of the alkali metal silicate and the polyisocyanate may be varied yielding products of different physical characteristics and probably differing chemical structure. In general, it is desirable to employ an excess of the silicate, i.e. a quantity greater than would be stoichiometrically equivalent to the polyisocyanate employed. On the other hand it is important not to use so little polyisocyanate that insufficient reaction occurs.

Typically the weight ratio between waterglass (having a SiO₂ content around 30%) and polyisocyanate is between 1:2 and 5:1, most preferably between 1:1 and 2:1. Below 1:2 the fire resistance is unsatisfactory, above 3:1 the bond strength diminishes.

The activity of the reaction mixture may be adjusted both through the isocyanate-silicate ratio and by using catalysts. Examples of suitable catalysts are those known per se, including tertiary amines, such as triethyl-, tripropyl-, tributyl- and triamylamine, N-methyl morpholine, N,N-dimethyl cyclohexylamine, N,N-dimethyl benzylamine, 2-methyl imidazole, pyrimidine, dimethylaniline and triethylene diamine. Examples of tertiary amines containing isocyanate-reactive hydrogen atoms are triethanolamine and N,N-dimethyl ethanolamine. Other suitable catalysts are silaamines having carbon-silicon bonds and nitrogen-containing bases such as tetraalkyl ammonium hydroxides; alkali hydroxides, alkali phenolates and alkali alcoholates. According to the invention organo metallic compounds, especially organo tin compounds, may also be used as catalysts.

A particularly preferred catalyst is 2,2'-dimorpholinodiethylether (commercially available from Huntsman Corporation under the tradename JEFFCAT DMDEE) and DABCO EG commercially available from Air Products.

The catalysts are generally used in a quantity of from 0.001 to 10 % by weight, based on the total adhesive formulation.

The compositions of the present invention may include other optional components such as additives typically used in adhesive compositions, e.g., wetting agents, dispersing aids, thickeners, surfactants, pigments, mineral fillers, defoaming agents and antimicrobial agents. Preferably however additives such as fillers and solvents are not used in the present invention. Also substances such as hydrolysed soy protein as described in US 2002/0031669 and US 6231985 or polyvinylalcohol as described in GB 1423558 are usually not incorporated in the present adhesive compositions.

The production of the adhesive in accordance with the invention is simple. All that is necessary is to homogeneously mix the liquid polyisocyanate with the aqueous alkali silicate solution, after which the mixture generally cures and hardens in the appropriate time frame which depends on the application equipment.

The conventional method of preparing alkali silicate-polyisocyanate composites involves mixing a first component, which typically comprises an alkali silicate, water, and optionally a catalyst, surfactant and wetting agent, with a second component, which typically comprises a polyisocyanate. After the first and second components are mixed together, the reaction proceeds to form a hardened composite.
Alternatively the catalyst can be incorporated into the polyisocyanate composition instead of into the alkali silicate-water component.

If the adhesive has a long pot-life then it can be applied manually by using brushes, rollers, notched trowels, coating knifes, roll coaters or by casting or spraying. Fast-reacting systems, however, have to be applied using meter-mix-dispense units and static mixers are adequate for low-volume application, but dynamic mixers are required for larger volumes.

According to the present invention the adhesive is used in sandwich panels comprising an inner core insulator (preferably non combustible mineral fibre, building material class A1 as per DIN 4102-1 such as rockwool) (preferred thickness between 4 and 15 cm) provided with facings of metal, gypsum or ceramics on one or both sides. The facings are adhered to the inner core using the present adhesive applied in an amount of between 50 and 400 g/m² depending on the calorific value of the adhesive that is being used.
Such composite panels pass A2 fire rating according to the new Euroclass.

Composite materials in accordance with this invention possess many advantages. They are effective thermal insulators and have rigid structures with good reaction-to-fire performance.
The composites are also economical to manufacture (via a double belt lamination process).

The various aspects of this invention are illustrated, but not limited by the following examples.

In these examples the following ingredients were used:
CRYSTAL 0100S; sodium waterglass (molar ratio SiO₂: Na₂O 2:1) available from INEOS Silicates, containing 28.0-29.5 % silicate, having a density of 1.49 g/ml and a viscosity at 20°C of 380-420 mPa s
PYRAMID P40: sodium disilicates spraydried powder (molar ratio SiO₂: Na₂O 2;2.2) available from INEOS Silicates, containing 52 - 54.5 % silicates , having a density of 1.37 g/ml
SUPRASEC 1007: prepolymer of NCO value 6.8 %, based on a MDI mixture and a polyether polyol of MW 6000, available from Huntsman Polyurethanes
SUPRASEC 2017: prepolymer of NCO value 16 %, based on a MDI mixture and a polyether polyol of MW 4000, available from Huntsman Polyurethanes
SUPRASEC 2026: prepolymer of NCO value 21.4 %, based on a MDI mixture and a polyether polyol mixture, available from Huntsman Polyurethanes

SUPRASEC 2008: prepolymer of NCO value 10.2 %, based on a MDI mixture and a polyether polyol of MW 4000, available from Huntsman Polyurethanes

SUPRASEC 5025: polymeric MDI available from Huntsman Polyurethanes

ISO 2: prepolymer of NCO value 21.4% based on an MDI mixture and a polyether polyol of MW 4000

ISO 3: prepolymer of NCO value 21.4% based on an MDI mixture and a polyester polyol of MW 2000

DMDEE: 2,2'-dimorpholinodiethylether catalyst

SUPRASEC is a trademark of Huntsman International LLC.

EXAMPLE 1:

Adhesive compositions were prepared containing the ingredients as listed below in Table 1 (amounts are given in grams). 1 wt% of water was added to the Crystal 0100S solution before use. The different components were mixed at low shear rate for approximately 15 seconds.

**Table 1**

| Formulation No. | 1 | 2 | 3 | 4 |
|---|---|---|---|---|
| CRYSTAL 0100S | 35 | 35 | 35 | 70 |
| SUPRASEC 1007 | 35 | 0 | 0 | 0 |
| SUPRASEC 2017 | 0 | 35 | 0 | 35 |
| SUPRASEC 2026 | 0 | 0 | 35 | 0 |
| DMDEE | 0.5 | 1 | 1 | 0.5 |

Each of these adhesives was applied in an amount of 100 to 120 g/m² to the surface of an aluminium substrate. After 10 to 15 seconds the aluminium substrate was pressed onto a wood substrate. After curing the bond strength was measured according to standard NBN EN 205. The results of the bond strengths measured for the different adhesive systems (in MPa) are given in Table 2. As a reference adhesive system a commercially available (from Huntsman Polyurethanes) polyisocyanate-based system of SUPRASEC 2026 and DALTOFOAM TR44203 was used (mixing ratio 66 : 34).

**Table 2**

| Adhesive formulation No. | Reference A | 1 | 2 | 3 | 4 |
|---|---|---|---|---|---|
| Bond Strength | 0.475 | 0.442 | 1.223 | 0.382 | 1.180 |

These results show that the adhesive formulations of the invention provide bond strengths equivalent or sometimes even better than the prior art polyisocyanate based adhesive systems.

EXAMPLE 2:

Adhesive compositions were prepared containing the ingredients as listed below in Table 3 (amounts are given in parts by weight). 1 wt% of water was added to the Crystal 0100S solution before use.

**Table 3**

| Formulation No. | 5 | 6 | 7 | 8 |
|---|---|---|---|---|
| CRYSTAL 0100S | 50 | 66.7 | 66.7 | 66.7 |
| SUPRASEC 2026 | 50 | 33.3 | 0 | 0 |
| SUPRASEC 1007 | 0 | 0 | 33.3 | 0 |
| SUPRASEC 2008 | 0 | 0 | 0 | 33.3 |

The fire properties of each of these adhesives were measured according to the DIN 4202 fire test.

The results in term of flame height (in cm) are given in Table 4. A flame height lower than 15 cm means that the product is classified B2 according to DIN 4201. A product with flame height above 15 cm is classified B3. As a reference adhesive system a commercially available (from Huntsman Polyurethanes) polyisocyanate-based system of SUPRASEC 5025 and DALTOFOAM TR42000 was used (mixing ratio 66 : 34).

**Table 4**

| Adhesive formulation No. | Reference B | 5 | 6 | 7 | 8 |
|---|---|---|---|---|---|
| Flame Height | > ± 15 | 1-2 | 0-0.5 | 0-0.5 | 0.5 |

These results show that the performance of the adhesives of the present invention in DIN 4201 p1, the small flame test, is substantially improved compared to prior art polyisocyanate based adhesives.

EXAMPLE 3:

Adhesive compositions were prepared containing the ingredients as listed below in Table 5 (amounts are given in grams). 1 wt% of water was added to the Crystal 0100S solution before use.

The calorific value of these adhesive systems and also of the Reference systems A and B as specified above was measured according to EN ISO 1716. The results in terms of calorific value (in MJ/kg) are also given in Table 5.

These results show that the calorific value of the formulations according to the invention is always much lower than that of prior art adhesive formulations. One can also see that the specifics of the polyisocyanate play an insignificant role in the performance of the adhesive.

Based on these calorific values one can determine the maximum amount of adhesive that can be applied to the substrate and still obtain A2 classification: For reference A and B these amounts are respectively 102 and 105 g/m² whereas for formulations according to the invention Nos. 9 and 13 these are respectively 172 and 267 g/m². Since more of the adhesive can be applied in the present invention adhesive penetration into the substrate (e.g. mineral wool) can be enhanced.

**Table 5**

| Formulation No. Ref.A Ref.B | | | 1 | 9 | 10 | 11 | 12 | 13 | 14 | 15 |
|---|---|---|---|---|---|---|---|---|---|---|
| CRYSTAL | | | 35 | 35 | 35 | 35 | 35 | 70 | 70 | 70 |
| 0100 S | | | | | | | | | | |
| SUPRASEC | | | 35 | 0 | 0 | 0 | 0 | 0 | 0 | 0 |
| 1007 | | | | | | | | | | |
| SUPRASEC | | | 0 | 35 | 0 | 35 | 35 | 35 | 0 | 0 |
| 2026 | | | | | | | | | | |
| SUPRASEC | | | 0 | 0 | 35 | 0 | 0 | 0 | 0 | 0 |
| 5025 | | | | | | | | | | |
| ISO 2 | | | 0 | 0 | 0 | 0 | 0 | 0 | 35 | 0 |
| ISO3 | | | 0 | 0 | 0 | 0 | 0 | 0 | 0 | 35 |
| Water | | | 0 | 0 | 0 | 1 | 3 | 0 | 0 | 0 |
| DMDEE | | | 0.5 | 0.1 | 0.1 | 0.1 | 0.1 | 0.1 | 0.1 | 0.1 |
| | | | | | | | | | | |
| Calorific Value | 39.3 | 38.1 | 21.7 | 23.2 | 22.6 | 23.3 | 22.5 | 15.0 | 12.6 | 14.0 |

EXAMPLE 4:

The bond strength in bonding steel to EPS of some of the above adhesion formulations applied in varying amounts (indicated in g/m²) was visually checked. The results are given in Table 6 (OK means substrate failure).

**Table 6**

| Formulation No. | Ref. A | Ref. A | 9 | 13 | 13 | 13 |
|---|---|---|---|---|---|---|
| Amount | 185 | 93 | 215 | 117 | 82 | 62 |
| Bond Strength | OK | OK | OK | OK | OK | ± OK |

Only at very low dosage of adhesive the bonds fail.

EXAMPLE 5:

A saturated solution of Pyramid P40 powder and water was prepared and cured using different polyisocyanates as indicated in Table 7. These cured materials do not show any foaming.

**Table 7**

| Formulation No. | 16 | 17 | 18 | 19 |
|---|---|---|---|---|
| PYRAMID P40 saturated solution | 35 | 35 | 35 | 70 |
| SUPRASEC 1007 | 35 | 0 | 0 | 0 |
| SUPRASEC 2017 | 0 | 35 | 0 | 35 |
| SUPRASEC 2026 | 0 | 0 | 35 | 0 |

To the saturated solution of Pyramid P40 as described above varying amounts of water were added as indicated in Table 8 below. In all these adhesive systems foaming occurred upon curing. Adding more than 40 wt% water results in more brittle adhesion layers.

**Table 8**

| Formulation No. | 20 | 21 | 22 | 23 | 24 | 25 | 26 |
|---|---|---|---|---|---|---|---|
| PYRAMID P40 | 50 | 50 | 50 | 50 | 50 | 50 | 50 |
| saturated solution | | | | | | | |
| | | | | | | | |
| Water | 1 | 2 | 5 | 10 | 20 | 40 | 50 |
| SUPRASEC | 50 | 50 | 50 | 50 | 50 | 50 | 50 |
| 2017 | | | | | | | |

## Claims

1. Sandwich panel comprising an insulation layer having on at least one side a glued-on coating layer comprising an adhesive **characterised in that** the adhesive is obtainable by reacting an aqueous alkali metal silicate solution with an organic polyisocyanate.

2. Sandwich panel according to claim 1 wherein the adhesive has a calorific value of below 25 MJ/kg, preferably in the range 10 to 20 MJ/kg, measured according to EN ISO 1716.

3. Sandwich panel according to claim 1 or 2 wherein the alkali metal silicate is a sodium silicate, preferably having a SiO₂:Na₂O weight ratio from 1.6:1 to 3.3:1.

4. Sandwich panel according to any one of the preceding claims wherein the aqueous alkali metal silicate solution is not a fully saturated one.

5. Sandwich panel according to claim 4 wherein the aqueous alkali metal silicate solution is obtained by adding 1 to 40 wt%, preferably 1 to 20 wt%, of water to a fully saturated aqueous alkali metal silicate solution.

6. Sandwich panel according to any one of the preceding claims wherein the viscosity of the aqueous alkali metal silicate solution is below 3000 mPa s.

7. Sandwich panel according to any one of the preceding claims wherein the polyisocyanate is an aromatic liquid polyisocyanate.

8. Sandwich panel according to claim 7 wherein the polyisocyanate is diphenylmethane diisocyanate or a derivative thereof.

9. Sandwich panel according to any one of the preceding claims wherein the polyisocyanate is a prepolymer having an average functionality of 2 to 2.9, preferably 2.1 to 2.6, a maximum viscosity of 6000 mPa s, and an isocyanate content of 6 to 30 wt%, preferably 10 to 26 wt%.

10. Sandwich panel according to any one of the preceding claims wherein the weight ratio between aqueous alkali metal silicate solution and polyisocyanate is between 1:2 and 5:1, preferably between 1:1 and 2:1.

11. Sandwich panel according to any one of the preceding claims wherein the reaction is carried out in the presence of a catalyst.

12. Sandwich panel according to any one of the preceding claims wherein the insulation layer comprises a non combustible mineral fibre such as rockwool.

13. Sandwich panel according to any one of the preceding claims wherein the coating layer is of metal, gypsum or ceramics.

14. Sandwich panel according to any one of the preceding claims wherein the adhesive is applied in an amount of between 50 and 400 g/m².

15. Sandwich panel according to any one of claims 12 to 14 passing the A2 fire Euro-classification rating according to EN 13501-1.

## Patentansprüche

1. Sandwich-Platte, umfassend eine Isolierungsschicht, die an wenigstens einer Seite eine angeklebte Überzugsschicht hat, die einen Kleber umfasst, **dadurch gekennzeichnet, dass** der Kleber durch Umsetzen einer wässrigen Alkalimetallsilicat-Lösung mit einem organischen Polyisocyanat erhältlich ist.

2. Sandwich-Platte nach Anspruch 1, wobei der Kleber einen Brennwert von unter 25 MJ/kg, vorzugsweise im Bereich von 10 bis 20 MJ/kg, gemessen gemäß EN ISO 1716, hat.

3. Sandwich-Platte nach Anspruch 1 oder 2, wobei das Alkalimetallsilicat ein Natriumsilicat, vorzugsweise mit einem SiO₂:Na₂O-Gewichtsverhältnis von 1,6:1 bis 3,3:1, ist.

4. Sandwich-Platte nach einem der vorangehenden Ansprüche, wobei die wässrige Alkalimetallsilicat-Lösung keine vollständig gesättigte ist.

5. Sandwich-Platte nach Anspruch 4, wobei die wässrige Alkalimetallsilicat-Lösung erhalten wird, indem 1 bis 40 Gew.-%, vorzugsweise 1 bis 20 Gew.-%, Wasser zu einer vollständig gesättigten wässrigen Alkalimetallsilicat-Lösung gegeben werden.

6. Sandwich-Platte nach einem der vorangehenden Ansprüche, wobei die Viskosität der wässrigen Alkalimetallsilicat-Lösung unter 3000 mPa.s ist.

7. Sandwich-Platte nach einem der vorangehenden Ansprüche, wobei das Polyisocyanat ein aromatisches flüssiges Polyisocyanat ist.

8. Sandwich-Platte nach Anspruch 7, wobei das Polyisocyanat Diphenylmethandiisocyanat oder ein Derivat davon ist.

9. Sandwich-Platte nach einem der vorangehenden Ansprüche, wobei das Polyisocyanat ein Prepolymer ist, das eine durchschnittliche Funktionalität von 2 bis 2,9, vorzugsweise 2,1 bis 2,6, eine maximale Viskosität von 6000 mPa.s und einen Isocyanatgehalt von 6 bis 30 Gew.-%, vorzugsweise 10 bis 26 Gew.-%, hat.

10. Sandwich-Platte nach einem der vorangehenden Ansprüche, wobei das Gewichtsverhältnis zwischen wässriger Alkalimetallsilicat-Lösung und Polyisocyanat zwischen 1:2 und 5:1, vorzugsweise zwischen 1:1 und 2:1, ist.

11. Sandwich-Platte nach einem der vorangehenden Ansprüche, wobei die Reaktion in Gegenwart eines Katalysators durchgeführt wird.

12. Sandwich-Platte nach einem der vorangehenden Ansprüche, wobei die Isolierungsschicht eine nicht brennbare Mineralfaser, zum Beispiel Steinwolle, umfasst.

13. Sandwich-Platte nach einem der vorangehenden Ansprüche, wobei die Überzugsschicht aus Metall, Gips oder Keramik ist.

14. Sandwich-Platte nach einem der vorangehenden Ansprüche, wobei der Kleber in einer Menge von zwischen 50 und 400 g/m² angewendet bzw. aufgetragen wird.

15. Sandwich-Platte nach einem der Ansprüche 12 bis 14, die der europäischen Klassifzierung für den Brandschutz gemäß EN 13501-1 genügt.

## Revendications

1. Panneau multicouche comprenant une couche isolante portant sur au moins une face une couche de revêtement collée comprenant un adhésif, **caractérisé en ce que** l'adhésif peut être obtenu en faisant réagir une solution aqueuse d'un silicate de métal alcalin avec un polyisocyanate organique.

2. Panneau multicouche suivant la revendication 1, dans lequel l'adhésif a un pouvoir calorifique inférieur à 25 MJ/kg, de préférence compris dans l'intervalle de 10 à 20 MJ/kg, mesuré suivant la norme EN ISO 1716.

3. Panneau multicouche suivant la revendication 1 ou 2, dans lequel le silicate de métal alcalin est un silicate de sodium, ayant de préférence un rapport pondéral SiO₂:Na₂O de 1,6:1 à 3,3:1.

4. Panneau multicouche suivant l'une quelconque des revendications précédentes, dans lequel la solution aqueuse de silicate de métal alcalin n'est pas une solution totalement saturée.

5. Panneau multicouche suivant la revendication 4, dans lequel la solution aqueuse de silicate de métal alcalin est obtenue en ajoutant 1 à 40 % en poids, de préférence 1 à 20 % en poids, d'eau à une solution aqueuse de silicate de métal alcalin totalement saturée.

6. Panneau multicouche suivant l'une quelconque des revendications précédentes, dans lequel la viscosité de la solution aqueuse de silicate de métal alcalin est inférieure à 3000 mPa.s.

7. Panneau multicouche suivant l'une quelconque des revendications précédentes, dans lequel le polyisocyanate est un polyisocyanate aromatique liquide.

8. Panneau multicouche suivant la revendication 7, dans lequel le polyisocyanate est le diphénylméthane-diisocyanate ou un de ses dérivés.

9. Panneau multicouche suivant l'une quelconque des revendications précédentes, dans lequel le polyisocyanate est un prépolymère ayant une fonctionnalité moyenne de 2 à 2,9, de préférence de 2,1 à 2,6, une viscosité maximale de 6000 mPa.s et une teneur en isocyanate de 6 à 30 % en poids, de préférence de 10 à 26 % en poids.

10. Panneau multicouche suivant l'une quelconque des revendications précédentes, dans lequel le rapport pondéral entre la solution aqueuse de silicate de métal alcalin et le polyisocyanate est compris entre 1:2 et 5:1, de préférence entre 1:1 et 2:1.

11. Panneau multicouche suivant l'une quelconque des revendications précédentes, dans lequel la réaction est conduite en présence d'un catalyseur.

12. Panneau multicouche suivant l'une quelconque des revendications précédentes, dans lequel la couche isolante comprend une fibre minérale non combustible telle que la laine de roche.

13. Panneau multicouche suivant l'une quelconque des revendications précédentes, dans lequel la couche de revêtement est constituée d'un métal, de gypse ou de matières céramiques.

14. Panneau multicouche suivant l'une quelconque des revendications précédentes, dans lequel l'adhésif est appliqué en une quantité de 50 à 400 g/m².

15. Panneau multicouche suivant l'une quelconque des revendications 12 à 14, subissant avec succès l'évaluation de la classification européenne contre l'incendie A2 d'après la norme EN 13501-1.
